# EUROPEAN PATENT APPLICATION

(11) **EP 4 765 819 A1**
(43) Date of publication of application: **24.06.2026**
(21) Application number: 24872053.4
(22) Date of filing: 19.09.2024
(51) Int. Cl.: H04N 19/70

(54) **DECODING DEVICE, ENCODING DEVICE, DECODING METHOD, AND ENCODING METHOD**

(30) Priority: 29.09.2023 US 202363541382 P
(71) Applicant: Panasonic Intellectual Property Corporation of America, Torrance, CA 90504 (US)
(72) Inventor: GAO, Jingying, Singapore 469332 (SG); TEO, Han Boon, Singapore 469332 (SG); LIM, Chong Soon, Singapore 469332 (SG); LIM, Shen Yi, Singapore 469332 (SG); YADAV, Praveen Kumar, Singapore 469332 (SG); ABE, Kiyofumi, Kadoma-shi, Osaka 571-8501 (JP); NISHI, Takahiro, Kadoma-shi, Osaka 571-8501 (JP); SUGIO, Toshiyasu, Kadoma-shi, Osaka 571-8501 (JP)
(74) Representative: Grünecker Patent- und Rechtsanwälte PartG mbB
(86) International application number: PCT/JP2024/033562
(87) International publication number: WO 2025/070262

(57) **Abstract**

A decoding device includes: a circuit; and a memory connected to the circuit, in which the circuit acquires, from a bitstream, an image and a parameter associated with the image, and the parameter contains modality information indicating an image type of the image.

## Description

### Field of the Invention

The present disclosure relates to a decoding device, an encoding device, a decoding method, and an encoding method.

### Background Art

Patent Literature 1 discloses an image processing system according to a background art. The image processing system includes an encoder (encoding device) and a decoder (decoding device). The encoding device receives an input image having various modalities. The encoding device extracts a feature from the input image and transmits the feature thus extracted to the decoding device. The decoding device executes an image analysis task in accordance with the feature thus received to output a segmentation map.

However, the background art includes no consideration for transmission of modality information on the image from the encoding device to the decoding device.

### Citation List

### Patent Literature

Patent Literature 1: US Patent Publication No. 2024/0046453

### Summary of the Invention

It is an object of the present disclosure to provide a decoding device, an encoding device, a decoding method, and an encoding method that enable transmission of modality information on an image from the encoding device to the decoding device to improve execution accuracy of task processing by the decoding device.

A decoding device according to an aspect of the present disclosure includes: a circuit; and a memory connected to the circuit, in which the circuit acquires, from a bitstream, an image and a parameter associated with the image, and the parameter contains modality information indicating an image type of the image.

### Brief Description of the Drawings

Fig. 1 is a simplified view depicting a configuration of an image processing system according to an embodiment of the present disclosure.
Fig. 2 is a simplified view depicting a configuration of a circuit included in an encoding device.
Fig. 3 is a flowchart depicting processing executed by the circuit included in the encoding device.
Fig. 4 is a simplified view depicting a configuration of a bitstream.
Fig. 5 is a chart of syntax according to a first example, relevant to setting of modality information.
Fig. 6 is another chart of the syntax according to the first example, relevant to setting of the modality information.
Fig. 7 is a chart of syntax according to a second example, relevant to setting of modality information.
Fig. 8 is another chart of the syntax according to the second example, relevant to setting of the modality information.
Fig. 9 is a simplified view depicting a configuration of a circuit included in a decoding device.
Fig. 10 is a flowchart depicting processing executed by the circuit included in the decoding device.
Fig. 11 is a simplified view depicting a configuration of a circuit included in the decoding device.
Fig. 12 is a flowchart depicting processing executed by the circuit included in the decoding device.
Fig. 13 is a simplified view depicting a configuration of a circuit included in the encoding device.
Fig. 14 is a simplified view depicting a configuration according to a first example, of a circuit included in the decoding device.
Fig. 15 is a simplified view depicting a configuration according to a second example, of a circuit included in the decoding device.
Fig. 16 is a view of a multilayer configuration according to a first example.
Fig. 17 is a chart of exemplary syntax relevant to setting of modality information.
Fig. 18 is a chart of exemplary syntax relevant to setting of modality information.
Fig. 19 is a chart of exemplary syntax relevant to setting of modality information.
Fig. 20 is a view of a multilayer configuration according to a second example.
Fig. 21 is a simplified view depicting a configuration of a circuit included in the decoding device.
Fig. 22 is a simplified view depicting a configuration of a bitstream.
Fig. 23 is a chart of exemplary syntax relevant to setting of modality information.
Fig. 24 is another chart of the exemplary syntax relevant to setting of the modality information.
Fig. 25 is a view depicting an exemplary configuration of an image constituted by a plurality of components.
Fig. 26 is a chart of exemplary syntax relevant to setting of modality information.
Fig. 27 is another chart of the exemplary syntax relevant to setting of the modality information.
Fig. 28 is a simplified view depicting a configuration of a circuit included in the decoding device.
Fig. 29 is a block diagram depicting an exemplary functional configuration of an encoding unit.
Fig. 30 is a view depicting an exemplary data hierarchical structure in a stream.
Fig. 31 is a block diagram depicting an exemplary functional configuration of a decoding unit.

### Description of Embodiments

### (Findings as basis of the present disclosure)

The image processing system according to the background art includes the encoding device and the decoding device. The encoding device receives an input image having various modalities. The encoding device extracts a feature from the input image and transmits the feature thus extracted to the decoding device. The decoding device executes an image analysis task in accordance with the feature thus received to output a segmentation map.

The decoding device executes task processing including a human vision and a machine task. The human vision means visual recognition or viewing of a moving image by a human being such as an operator or a user. The machine task includes various types of task processing with use of an AI model, such as object detection, object tracking, object segmentation, action recognition, or pose estimation.

According to the background art, modality information is not transmitted from the encoding device to the decoding device. This may lead to failure in selection of the most appropriate task processing or the most appropriate AI model according to an image type of the input image, thereby deteriorating execution accuracy of task processing.

In order to solve such a problem, the inventor has devised the present disclosure through finding that this problem can be solved by transmission from the encoding device to the decoding device of modality information indicating the image type of the image and contained in a bitstream and execution by the decoding device of task processing according to the modality information.

Description is made next to respective aspects of the present disclosure.

A decoding device according to a first aspect of the present disclosure includes: a circuit; and a memory connected to the circuit, in which the circuit acquires, from a bitstream, an image and a parameter associated with the image, and the parameter contains modality information indicating an image type of the image.

According to the first aspect, the encoding device can transmit, to the decoding device, the modality information indicating the image type of the image and contained in the bitstream, so as to improve execution accuracy of task processing by the decoding device.

As a decoding device according to a second aspect of the present disclosure, in the first aspect, preferably, the image type includes at least one of a visible light image, a thermal image, an infrared image, a LiDAR image, a RADAR image, or an AI generated image.

According to the second aspect, the decoding device can execute the most appropriate task processing according to the visible light image, the thermal image, the infrared image, the LiDAR image, the RADAR image, or the AI generated image.

As a decoding device according to a third aspect of the present disclosure, in the first or second aspect, preferably, the circuit executes task processing in accordance with the image, and switches the task processing in accordance with the modality information.

According to the third aspect, the decoding device can execute the most appropriate task processing according to an image type, so as to improve execution accuracy of task processing by the decoding device.

As a decoding device according to a fourth aspect of the present disclosure, in the third aspect, preferably, the task processing includes a machine task.

According to the fourth aspect, the decoding device can execute the most appropriate machine task according to the image type.

As a decoding device according to a fifth aspect of the present disclosure, in the third or fourth aspect, preferably, the task processing includes a human vision.

According to the fifth aspect, the decoding device can execute the most appropriate human vision according to the image type.

As a decoding device according to a sixth aspect of the present disclosure, in any one of the first to fifth aspects, preferably, the circuit executes task processing in accordance with the image, and switches an AI model or image processing used for the task processing in accordance with the modality information.

According to the sixth aspect, the decoding device can execute task processing with use of the most appropriate AI model or the most appropriate image processing according to the image type, so as to improve execution accuracy of task processing by the decoding device.

As a decoding device according to a seventh aspect of the present disclosure, in any one of the first to sixth aspects, preferably, the parameter further contains transformation information for transformation of a pixel value of the image to a sensor data value or transformation of the image to a sensing image.

According to the seventh aspect, the decoding device can transform the pixel value of the image to the sensor data value or can transform the image to the sensing image in accordance with the transformation information.

As a decoding device according to an eighth aspect of the present disclosure, in the seventh aspect, preferably, the circuit transforms the pixel value of the image to the sensor data value, or transforms the image to the sensing image in accordance with the transformation information, and executes task processing in accordance with the sensor data value or the sensing image.

According to the eighth aspect, the decoding device executes transformation processing prior to the task processing so as to enable execution of the task processing according to the sensor data value or the sensing image.

As a decoding device according to a ninth aspect of the present disclosure, in the seventh aspect, preferably, the circuit executes task processing in accordance with the image and the transformation information.

According to the ninth aspect, the decoding device executes transformation processing upon the task processing so as to enable execution of the task processing according to the sensor data value or the sensing image.

As a decoding device according to a tenth aspect of the present disclosure, in any one of the first to ninth aspects, preferably, the circuit acquires, for acquisition of the parameter, the parameter from a predetermined header region in the bitstream, and the predetermined header region includes VUI or SEI.

According to the tenth aspect, the decoding device can easily acquire the parameter from the predetermined header region in the bitstream.

As a decoding device according to an eleventh aspect of the present disclosure, in any one of the first to tenth aspects, preferably, the bitstream has a multilayer configuration including a plurality of image layers, and the circuit acquires, for acquisition of the image, a plurality of images different in terms of the image type from the plurality of image layers.

According to the eleventh aspect, the encoding device can transmit to the decoding device the plurality of images different in terms of the image type, and the decoding device can appropriately acquire the plurality of images from the bitstream.

As a decoding device according to a twelfth aspect of the present disclosure, in the eleventh aspect, preferably, the circuit acquires, for acquisition of the parameter, a plurality of parameters associated with the plurality of images from a header region in a specific one of the plurality of image layers.

According to the twelfth aspect, the decoding device can collectively acquire the plurality of parameters associated with the plurality of images in the plurality of image layers from the header region in the specific image layer.

As a decoding device according to a thirteenth aspect of the present disclosure, in the eleventh aspect, preferably, the circuit acquires, for acquisition of the parameter, a plurality of parameters associated with the plurality of images from a plurality of header regions in the plurality of image layers.

According to the thirteenth aspect, the decoding device can individually acquire the parameters associated with the images in the image layers from the header regions in the image layers.

As a decoding device according to a fourteenth aspect of the present disclosure, in any one of the first to tenth aspects, preferably, the image is divided into a plurality of subpictures, and the circuit acquires from the bitstream, for acquisition of the image, the plurality of subpictures different in terms of the image type.

According to the fourteenth aspect, the encoding device can transmit to the decoding device the plurality of subpictures different in terms of the image type, and the decoding device can appropriately acquire the plurality of subpictures from the bitstream.

As a decoding device according to a fifteenth aspect of the present disclosure, in the fourteenth aspect, preferably, the circuit acquires, for acquisition of the parameter, a plurality of parameters associated with the plurality of subpictures from a header region for the image.

According to the fifteenth aspect, the decoding device can collectively acquire the plurality of parameters associated with the plurality of subpictures from the header region for the image.

As a decoding device according to a sixteenth aspect of the present disclosure, in any one of the first to tenth aspects, preferably, the image is constituted by a plurality of components, and the circuit acquires from the bitstream, for acquisition of the image, the plurality of components different in terms of the image type.

According to the sixteenth aspect, the encoding device can transmit to the decoding device the plurality of components different in terms of the image type, and the decoding device can appropriately acquire the plurality of components from the bitstream.

As a decoding device according to a seventeenth aspect of the present disclosure, in the sixteenth aspect, preferably, the circuit acquires, for acquisition of the parameter, a plurality of parameters associated with the plurality of components from a header region for the image.

According to the seventeenth aspect, the decoding device can acquire the plurality of parameters associated with the plurality of components from the header region for the image.

As a decoding device according to an eighteenth aspect of the present disclosure, in the sixteenth aspect, preferably, the modality information is assigned to one of the plurality of components, and the circuit acquires, for acquisition of the image, the one component from the bitstream.

According to the eighteenth aspect, when only the single component is of a necessary image type, the modality information is assigned to the single component so as to enable the decoding device to appropriately acquire the single component from the bitstream.

As a decoding device according to a nineteenth aspect of the present disclosure, in the eighteenth aspect, preferably, when the modality information is not assigned to another component different from the one component in the plurality of components, the circuit acquires, for acquisition of the image, the other component as a dummy image.

According to the nineteenth aspect, the decoding device acquires, as the dummy image, the other component not assigned with the modality information, so as to reduce a processing load to the decoding device.

As a decoding device according to a twentieth aspect of the present disclosure, in any one of the first to nineteenth aspects, preferably, the circuit acquires, for acquisition of the image, a plurality of images different in terms of the image type, and the circuit further executes at least one task processing in accordance with the plurality of images.

The twentieth aspect can improve execution accuracy of the at least one task processing by the decoding device according to the plurality of images different in terms of the image type.

As a decoding device according to a twenty-first aspect of the present disclosure, in the twentieth aspect, preferably, the plurality of images includes a visible light image, and the at least one task processing includes a human vision.

According to the twenty-first aspect, the decoding device can appropriately execute the human vision when the plurality of images includes a visible light image.

An encoding device according to a twenty-second aspect of the present disclosure includes: a circuit; and a memory connected to the circuit, in which the circuit encodes, into a bitstream, an image and a parameter associated with the image, and the parameter contains modality information indicating an image type of the image.

According to the twenty-second aspect, the encoding device can transmit, to the decoding device, the modality information indicating the image type of the image and contained in the bitstream. This can improve execution accuracy of task processing by the decoding device.

As an encoding device according to a twenty-third aspect of the present disclosure, in the twenty-second aspect, preferably, the image type includes at least one of a visible light image, a thermal image, an infrared image, a LiDAR image, a RADAR image, or an AI generated image.

According to the twenty-third aspect, the decoding device can execute the most appropriate task processing according to the visible light image, the thermal image, the infrared image, the LiDAR image, the RADAR image, or the AI generated image.

As an encoding device according to a twenty-fourth aspect of the present disclosure, in the twenty-second or twenty-third aspect, preferably, the circuit further generates the image in accordance with a sensor data value or a sensing image.

According to the twenty-fourth aspect, the encoding device generates the image in accordance with the sensor data value or the sensing image so as to enable appropriate transmission of the image to the decoding device.

As an encoding device according to a twenty-fifth aspect of the present disclosure, in the twenty-fourth aspect, preferably, the parameter further contains transformation information for transformation of a pixel value of the image to the sensor data value or transformation of the image to the sensing image.

According to the twenty-fifth aspect, the parameter contains the transformation information so as to enable the decoding device to transform the pixel value of the image to the sensor data value or transform the image to the sensing image.

As an encoding device according to a twenty-sixth aspect of the present disclosure, in any one of the twenty-second to twenty-fifth aspects, preferably, the circuit encodes, for encoding of the parameter, the parameter into a predetermined header region in the bitstream, and the predetermined header region includes VUI or SEI.

According to the twenty-sixth aspect, the decoding device can easily acquire the parameter from the predetermined header region in the bitstream.

As an encoding device according to a twenty-seventh aspect of the present disclosure, in any one of the twenty-second to twenty-sixth aspects, preferably, the bitstream has a multilayer configuration including a plurality of image layers, and the circuit encodes, for encoding of the image, a plurality of images different in terms of the image type into the plurality of image layers.

According to the twenty-seventh aspect, the encoding device can transmit to the decoding device the plurality of images different in terms of the image type, and the decoding device can appropriately acquire the plurality of images from the bitstream.

As an encoding device according to a twenty-eighth aspect of the present disclosure, in the twenty-seventh aspect, preferably, the circuit encodes, for encoding of the parameter, a plurality of parameters associated with the plurality of images into a header region in a specific one of the plurality of image layers.

According to the twenty-eighth aspect, the encoding device can collectively encode the plurality of parameters associated with the plurality of images in the plurality of image layers into the header region in the specific image layer.

As an encoding device according to a twenty-ninth aspect of the present disclosure, in the twenty-seventh aspect, preferably, the circuit encodes, for encoding of the parameter, a plurality of parameters associated with the plurality of images into a plurality of header regions in the plurality of image layers.

According to the twenty-ninth aspect, the encoding device can individually encode the parameters associated with the images in the image layers into the header regions in the image layers.

As an encoding device according to a thirtieth aspect of the present disclosure, in any one of the twenty-second to twenty-sixth aspects, preferably, the image is divided into a plurality of subpictures, and the circuit encodes into the bitstream, for encoding of the image, the plurality of subpictures different in terms of the image type.

According to the thirtieth aspect, the encoding device can transmit to the decoding device the plurality of subpictures different in terms of the image type, and the decoding device can appropriately acquire the plurality of subpictures from the bitstream.

As an encoding device according to a thirty-first aspect of the present disclosure, in the thirtieth aspect, preferably, the circuit encodes, for encoding of the parameter, a plurality of parameters associated with the plurality of subpictures into a header region for the image.

According to the thirty-first aspect, the encoding device can collectively encode the plurality of parameters associated with the plurality of subpictures into the header region for the image.

As an encoding device according to a thirty-second aspect of the present disclosure, in any one of the twenty-second to twenty-sixth aspects, preferably, the image is constituted by a plurality of components, and the circuit encodes into the bitstream, for encoding of the image, the plurality of components different in terms of the image type.

According to the thirty-second aspect, the encoding device can transmit to the decoding device the plurality of components different in terms of the image type, and the decoding device can appropriately acquire the plurality of components from the bitstream.

As an encoding device according to a thirty-third aspect of the present disclosure, in the thirty-second aspect, preferably, the circuit encodes, for encoding of the parameter, a plurality of parameters associated with the plurality of components into a header region for the image.

According to the thirty-third aspect, the encoding device can encode the plurality of parameters associated with the plurality of components into the header region for the image.

As an encoding device according to a thirty-fourth aspect of the present disclosure, in the thirty-second aspect, preferably, the modality information is assigned to one of the plurality of components, and the circuit encodes, for encoding of the image, the one component into the bitstream.

According to the thirty-fourth aspect, when only the single component is of a necessary image type, the modality information is assigned to the single component so as to enable the encoding device to appropriately encode the single component into the bitstream.

As an encoding device according to a thirty-fifth aspect of the present disclosure, in the thirty-fourth aspect, preferably, when the modality information is not assigned to another component different from the one component in the plurality of components, the circuit encodes, for encoding of the image, the other component as a dummy image.

According to the thirty-fifth aspect, the encoding device encodes, as the dummy image, the other component not assigned with the modality information, so as to reduce a processing load to the encoding device.

A decoding method according to a thirty-sixth aspect of the present disclosure includes acquiring from a bitstream, by a decoding device, an image and a parameter associated with the image, in which the parameter contains modality information indicating an image type of the image.

According to the thirty-sixth aspect, the encoding device can transmit, to the decoding device, the modality information indicating the image type of the image and contained in the bitstream, so as to improve execution accuracy of task processing by the decoding device.

An encoding method according to a thirty-seventh aspect of the present disclosure includes encoding into a bitstream, by an encoding device, an image and a parameter associated with the image, in which the parameter contains modality information indicating an image type of the image.

According to the thirty-seventh aspect, the encoding device can transmit, to the decoding device, the modality information indicating the image type of the image and contained in the bitstream. This can improve execution accuracy of task processing by the decoding device.

### (Embodiments of the present disclosure)

An embodiment of the present disclosure will be hereinafter described in detail with reference to the drawings. An element denoted by an identical reference sign in different drawings will indicate an identical or corresponding element.

Embodiments to be described hereinafter will each refer to a specific example of the present disclosure. The following embodiments will include numerical values, shapes, constituent elements, steps, order of the steps, and the like, which are merely exemplary and do not intend to limit the present disclosure. Among the constituent elements according to the following embodiments, any constituent element not recited in any independent claim referring to the top-level concept will be described as an optional constituent element. Any of contents in all the embodiments can be replaced or combined. Each of these general or specific aspects may be achieved by means of a system, a method, an integrated circuit, a computer program, or a computer-readable recording medium such as a CD-ROM, or may be achieved by an appropriate combination of any of the system, the method, the integrated circuit, the computer program, and the recording medium.

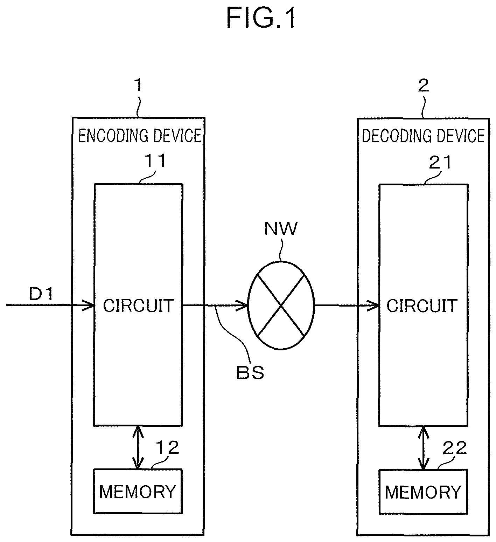

Fig. 1 is a simplified view depicting a configuration of an image processing system according to an embodiment of the present disclosure. The image processing system includes an encoding device 1, a decoding device 2, and a transmission line NW.

The encoding device 1 receives image data D1 from an external device. Examples of the external device include a camera configured to capture a moving image. The external device transmits, to the encoding device 1, the image data D1 of the moving image thus captured.

The encoding device 1 generates a bitstream BS in accordance with the image data D1. A bitstream is a data string of digital data or a flow of the digital data. The bitstream (or simply the stream) may be constituted by a single stream or a plurality of streams divided into a plurality of hierarchical layers. The bitstream may be transmitted by serial communication through a single transmission line or by packet communication through a plurality of transmission lines. The encoding device 1 transmits the bitstream BS thus generated to the decoding device 2 via the transmission line NW. The decoding device 2 receives the bitstream BS.

The decoding device 2 decodes the image data D1 from the bitstream BS, and executes task processing in accordance with the image data D1 thus decoded. The task processing includes a human vision and a machine task. The human vision means visual recognition or viewing of a moving image by a human being such as an operator or a user. The machine task includes various types of task processing such as object detection, object tracking, object segmentation, action recognition, and pose estimation with use of artificial intelligence (AI) models as machine-learned estimation models. A task processor configured to execute the human vision includes a display device such as a liquid crystal display or an organic EL display. A task processor configured to execute the machine task includes an inference device equipped with AI.

The transmission line NW is constituted by the Internet, a wide area network (WAN), a local area network (LAN), or an appropriate combination of any of these. The transmission line NW is desirably a private network or the like for secured communication with limited access.

The encoding device 1 includes a circuit 11 and a memory 12 connected to the circuit 11. The circuit 11 includes a processor such as a CPU. The memory 12 includes an appropriate recording medium such as a ROM, a RAM, an HDD, an SSD, or a semiconductor memory. The memory 12 stores data to be processed or data being processed by the circuit 11, and the like.

The decoding device 2 includes a circuit 21 and a memory 22 connected to the circuit 21. The circuit 21 includes a processor such as a CPU. The memory 22 includes an appropriate recording medium such as a ROM, a RAM, an HDD, an SSD, or a semiconductor memory. The memory 22 stores data to be processed or data being processed by the circuit 21, and the like.

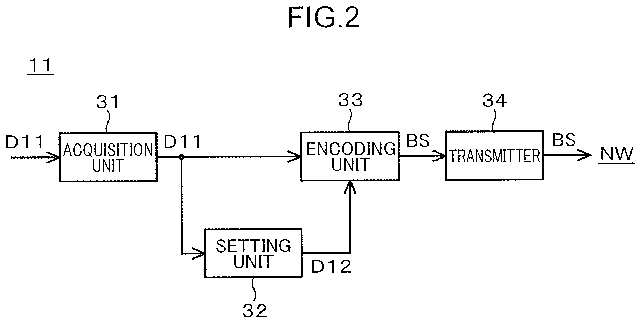

Fig. 2 is a simplified view depicting a configuration of the circuit 11 included in the encoding device 1. The circuit 11 includes an acquisition unit 31, a setting unit 32, an encoding unit 33, and a transmitter 34.

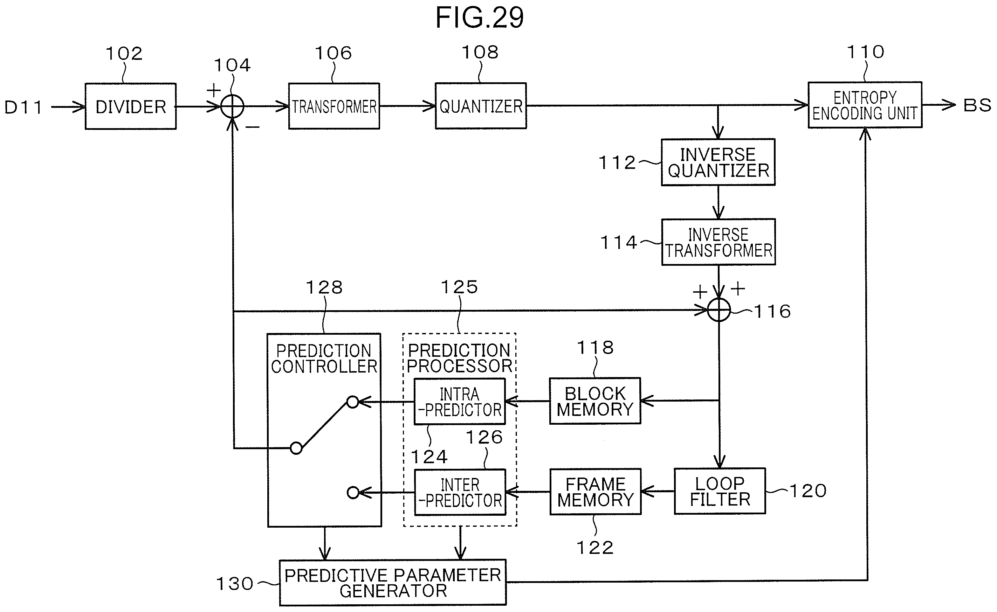

Description is made next to the encoding unit 33 according to the present embodiment. Fig. 29 is a block diagram depicting an exemplary functional configuration of the encoding unit 33 according to the present embodiment. The encoding unit 33 encodes an image in block units.

As depicted in Fig. 29, the encoding unit 33 includes a divider 102, a subtractor 104, a transformer 106, a quantizer 108, an entropy encoding unit 110, an inverse quantizer 112, an inverse transformer 114, an adder 116, a block memory 118, a loop filter 120, a frame memory 122, an intra-predictor 124, an inter-predictor 126, a prediction controller 128, and a predictive parameter generator 130. The intra-predictor 124 and the inter-predictor 126 constitute part of a prediction processor 125.

For example, the encoding unit 33 depicted in Fig. 29 includes a plurality of constituent elements implemented by the circuit 11 and the memory 12 depicted in Fig. 1.

The circuit 11 includes a processor such as a CPU. The circuit 11 may be constituted by an electronic circuit dedicated or generalized to image encoding, or by an assembly of a plurality of electronic circuits. The circuit 11 may function as a plurality of constituent elements except for a constituent element for information storage, out of the plurality of constituent elements included in the encoding unit 33 depicted in Fig. 29.

The memory 12 may be constituted by an electronic circuit dedicated or generalized to information storage, or by an assembly of a plurality of electronic circuits. The memory 12 may be externally connected to the circuit 11 or may be incorporated in the circuit 11. The memory 12 may be a magnetic disk, an optical disk, or the like, or may be expressed as a storage, a recording medium, or the like. The memory 12 may be a nonvolatile memory or a volatile memory.

The memory 12 may store an image to be encoded, or a stream corresponding to an encoded image. The memory 12 may store a program for image encoding by the processor.

The memory 12 may function as the constituent element for information storage, out of the plurality of constituent elements included in the encoding unit 33 depicted in Fig. 29. Specifically, the memory 12 may function as the block memory 118 and the frame memory 122 depicted in Fig. 29. More specifically, the memory 12 may store a restructured image (specifically, a restructured block, a restructured picture, or the like).

In the encoding unit 33, part of the plurality of constituent elements depicted in Fig. 29 is not necessarily mounted, and part of a plurality of processing executed by the plurality of constituent elements is not necessarily be executed. Alternatively, part of the plurality of constituent elements depicted in Fig. 29 may be mounted on a different device, and part of the plurality of processing executed by the plurality of constituent elements may be executed by the different device.

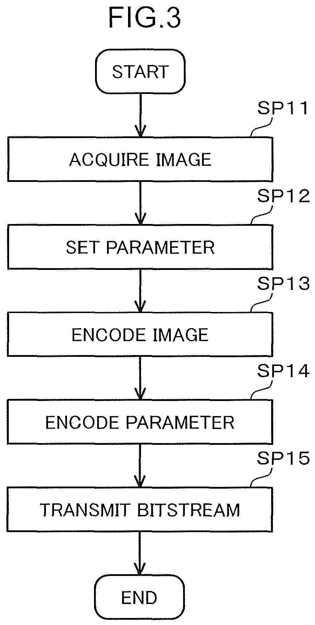

Fig. 3 is a flowchart depicting processing executed by the circuit 11 included in the encoding device 1.

Initially in step SP11, the acquisition unit 31 acquires image data D11 indicating an image Q as a processing target received from an external device. The image data D11 corresponds to the image data D1 indicated in Fig. 1.

Subsequently in step SP12, the setting unit 32 sets a parameter P in association with the image Q. The parameter P contains modality information D12 on the image Q. The modality information D12 indicates an image type of the image Q. The image type exemplarily includes at least one of a visible light image, a thermal image, an infrared image, a light detection and ranging (LiDAR) image, a radio detection and ranging (RADAR) image, or an AI generated image. The setting unit 32 may set the parameter P through image analysis according to the image data D11, or may set the parameter P in accordance with setting information inputted by an operator of the encoding device 1.

The visible light image includes a natural image, an RGB image, or the like, and is used for provision of detailed color information for the human vision or the machine task, and the like. The thermal image includes a temperature distribution image or the like, and is used for sensing or the like of a creature in the dark, and the like. The infrared image includes an image captured with use of an infrared camera, or the like, and is used for imaging in the dark, and the like. The LiDAR image includes a range image detected by a range sensor with use of laser light, or the like, and is used for provision of accurate range information, and the like. The RADAR image includes a range image detected by a range sensor with use of radio waves, or the like, and is used for ranging under a certain photoirradiation condition, and the like. The AI generated image includes an image generated by AI, an image obtained by adding a caption generated by AI to a visible light image, or the like.

Subsequently in step SP13, the encoding unit 33 encodes, into the bitstream BS, the image Q indicated by the image data D11 received from the acquisition unit 31.

Subsequently in step SP14, the encoding unit 33 encodes, into the bitstream BS, the parameter P containing the modality information D12 and received from the setting unit 32. Herein, encoding the parameter P into the bitstream BS may be expressed as retaining the parameter P in the bitstream BS or storing the parameter P in the bitstream BS. Processing in step SP13 and processing in step SP14 may be executed in inverse order of exemplification in Fig. 3, or may be executed simultaneously.

Subsequently in step SP15, the transmitter 34 transmits the bitstream BS received from the encoding unit 33 to the decoding device 2 via the transmission line NW.

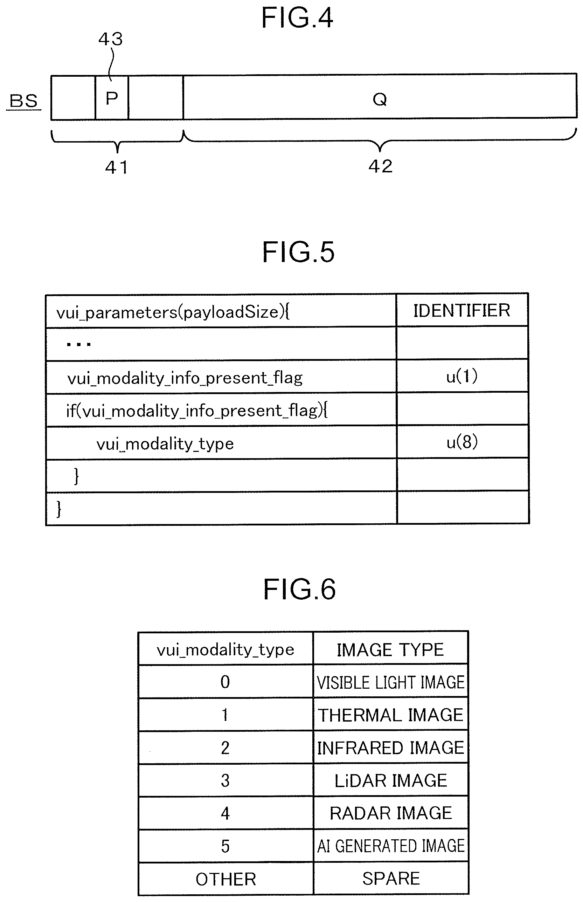

Fig. 4 is a simplified view depicting a configuration of the bitstream BS. The bitstream BS contains a header region 41 and a payload region 42. The encoding unit 33 stores encoded data of the image Q in the payload region 42, and stores encoded data of the parameter P associated with the image Q in the header region 41.

The encoding unit 33 may encode the encoded data of the parameter P in a predetermined region 43 in the header region 41. The predetermined region 43 may correspond to video usability information (VUI) or supplemental enhancement information (SEI). The predetermined region 43 may alternatively correspond to, unlimitedly to the VUI or the SEI, VPS, SPS, PPS, PH, SH, APS, a tile header, a system layer header, or the like.

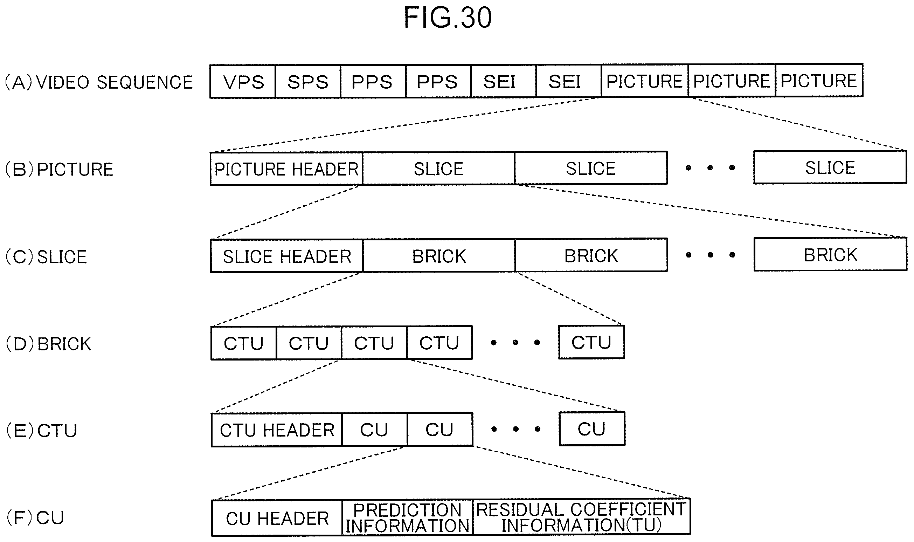

Fig. 30 is a view depicting an exemplary data hierarchical structure in a stream. The stream exemplarily contains a video sequence. As depicted in (A) in Fig. 30, the video sequence exemplarily contains a video parameter set (VPS), a sequence parameter set (SPS), a picture parameter set (PPS), supplemental enhancement information (SEI), and a plurality of pictures.

The VPS contains, in a moving image constituted by a plurality of layers, an encoded parameter common to the plurality of layers, and an encoded parameter associated with the plurality of layers or an individual layer included in the moving image.

The SPS contains a parameter used for a sequence, that is, an encoded parameter to be referred to by the decoding device 2 for decoding of the sequence. The encoded parameter may exemplarily indicate a width or a height of a picture. There may optionally be provided a plurality of SPSs.

The PPS includes a parameter used for a picture, that is, an encoded parameter to be referred to by the decoding device 2 for decoding of each picture in a sequence. The encoded parameter may exemplarily include a reference value of a quantization width to be used for picture decoding, and a flag indicating application of weighted prediction. There may optionally be provided a plurality of PPSs. Each of the SPS and the PPS may simply be called a parameter set.

As depicted in (B) in Fig. 30, a picture contains a picture header and at least one slice. The picture header contains an encoded parameter to be referred to by the decoding device 2 for decoding of the at least one slice.

As depicted in (C) in Fig. 30, the slice contains a slice header and at least one brick. The slice header contains an encoded parameter to be referred to by the decoding device 2 for decoding of the at least one brick.

As depicted in (D) in Fig. 30, the brick contains at least one coding tree unit (CTU).

The picture may contain no slice, and may contain a tile group instead of the slice. In this case, the tile group contains at least one tile. The brick may optionally contain a slice.

The CTU is also called a super block or a basic division unit. As depicted in (E) in Fig. 30, the CTU contains a CTU header and at least one coding unit (CU). The CTU header contains an encoded parameter to be referred to by the decoding device 2 for decoding of the at least one CU.

The CU may optionally be divided into a plurality of small CUs. As depicted in (F) in Fig. 30, the CU contains a CU header, prediction information, and residual coefficient information. The prediction information is information for prediction of a CU. The residual coefficient information is information indicating a prediction residual. The CU is basically identical to a prediction unit (PU) or a transform unit (TU), and may alternatively contain a plurality of TUs smaller than the CU. The CU may optionally be processed in virtual pipeline decoding units (VPDUs) constituting the CU. A VPDU is exemplarily a fixed unit processible at one stage upon pipeline processing in hardware.

The stream does not necessarily contain part of the plurality of hierarchical layers depicted in Fig. 30. These hierarchical layers may be changed in terms of their order, and any of the hierarchical layers may be replaced with another hierarchical layer.

A picture as a target of processing currently executed by a device such as the encoding device 1 or the decoding device 2 is referred to as a current picture. The current picture means an encoding target picture when the processing corresponds to encoding, and the current picture means a decoding target picture when the processing corresponds to decoding. A block (a CU or a block of the CU) as a target of processing currently executed by a device such as the encoding device 1 or the decoding device 2 is referred to as a current block. The current block means an encoding target block when the processing corresponds to encoding, and the current block means a decoding target block when the processing corresponds to decoding.

Figs. 5 and 6 are charts of syntax according to a first example, relevant to setting of the modality information D12. Figs. 5 and 6 exemplify a case where the modality information D12 is expressed as a value of an identifier of vui_modality_type contained in a VUI parameter.

As in Fig. 5, vui_modality_info_present_flag, which is contained in the VUI parameter, equal to 1 indicates that vui_modality_type is present. In contrast, vui_modality_info_present_flag equal to 0 indicates that vui_modality_type is not present. Alternatively, vui_modality_info_present_flag equal to 0 may indicate that the value of vui_modality_type is equal to 0.

As in Fig. 6, the value of vui_modality_type equal to 0 indicates that the image type of the image Q is a visible light image. The value of vui_modality_type equal to 1 indicates that the image type of the image Q is a thermal image. The value of vui_modality_type equal to 2 indicates that the image type of the image Q is an infrared image. The value of vui_modality_type equal to 3 indicates that the image type of the image Q is a LiDAR image. The value of vui_modality_type equal to 4 indicates that the image type of the image Q is a RADAR image. The value of vui_modality_type equal to 5 indicates that the image type of the image Q is an AI generated image. The value of vui_modality_type having any other value indicates a spare column reserved for future use. The number of images defined in Fig. 6 may be increased or decreased in accordance with target image types.

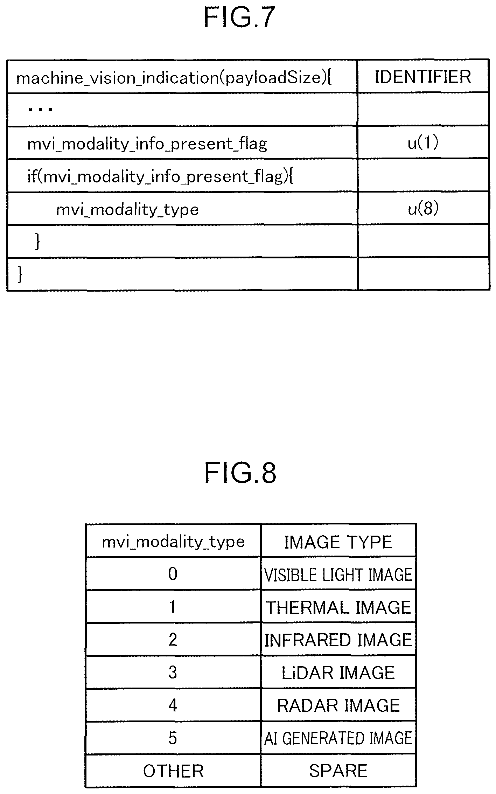

Figs. 7 and 8 are charts of syntax according to a second example, relevant to setting of the modality information D12. Figs. 7 and 8 exemplify a case where the modality information D12 is expressed as a value of an identifier of mvi_modality_type contained in an SEI message such as machine_vision_indication.

As in Fig. 7, mvi_modality_info_present_flag, which is contained in the SEI message, equal to 1 indicates that mvi_modality_type is present. In contrast, mvi_modality_info_present_flag equal to 0 indicates that mvi_modality_type is not present. Alternatively, mvi_modality_info_present_flag equal to 0 may indicate that the value of mvi_modality_type is equal to 0.

As in Fig. 8, the value of mvi_modality_type equal to 0 indicates that the image type of the image Q is a visible light image. The value of mvi_modality_type equal to 1 indicates that the image type of the image Q is a thermal image. The value of mvi_modality_type equal to 2 indicates that the image type of the image Q is an infrared image. The value of mvi_modality_type equal to 3 indicates that the image type of the image Q is a LiDAR image. The value of mvi_modality_type equal to 4 indicates that the image type of the image Q is a RADAR image. The value of mvi_modality_type equal to 5 indicates that the image type of the image Q is an AI generated image. The value of mvi_modality_type having any other value indicates a spare column reserved for future use. The number of images defined in Fig. 8 may be increased or decreased in accordance with target image types.

Image data to be encoded into the bitstream BS is typically constituted by a plurality of components (image constituents). For example, a visible light image is constituted by a plurality of color constituents (R, G, and B), or is constituted by a single luminance constituent (Y) and a plurality of color difference constituents (Cb and Cr). Depending on image types, there are an image constituted by three image constituents such as a color visible light image, and an image constituted by a single image constituent (hereinafter, referred to as a "single constituent image") such as a monochrome visible light image (a visible light image containing only a luminance constituent), a thermal image, an infrared image, a LiDAR image, or a RADAR image.

According to a first example, in a case where the bitstream BS is constituted by three components and the image Q of the image type as the single constituent image is encoded, only a first component is encoded into the bitstream BS as a normal image, and second and third components are encoded into the bitstream BS as dummy images. Encoding as a dummy image may be simpler than encoding as a normal image. According to a second example, in the case where the bitstream BS is constituted by three components and the image Q of the image type as the single constituent image is encoded, the image Q as the single constituent image may be transformed to an image constituted by three image constituents and the first to third components may be encoded into the bitstream BS as normal images. According to a third example, in a case where the image Q of the image type as the single constituent image is encoded, the bitstream BS may be formatted to be constituted by only a single component and only the first component may be encoded into the bitstream BS as a normal image.

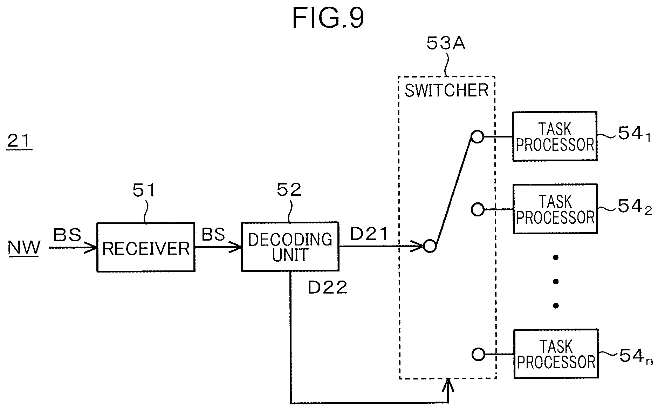

Fig. 9 is a simplified view depicting a configuration of the circuit 21 included in the decoding device 2. The circuit 21 includes a receiver 51, a decoding unit 52, a switcher 53A, and plural n (n is a natural number of two or more) of task processors 54₁ to 54ₙ. Task processing executed by the task processors 54₁ to 54ₙ includes the human vision and the machine task. The machine task includes various types of task processing with use of an AI model, such as object detection, object tracking, object segmentation, action recognition, or pose estimation.

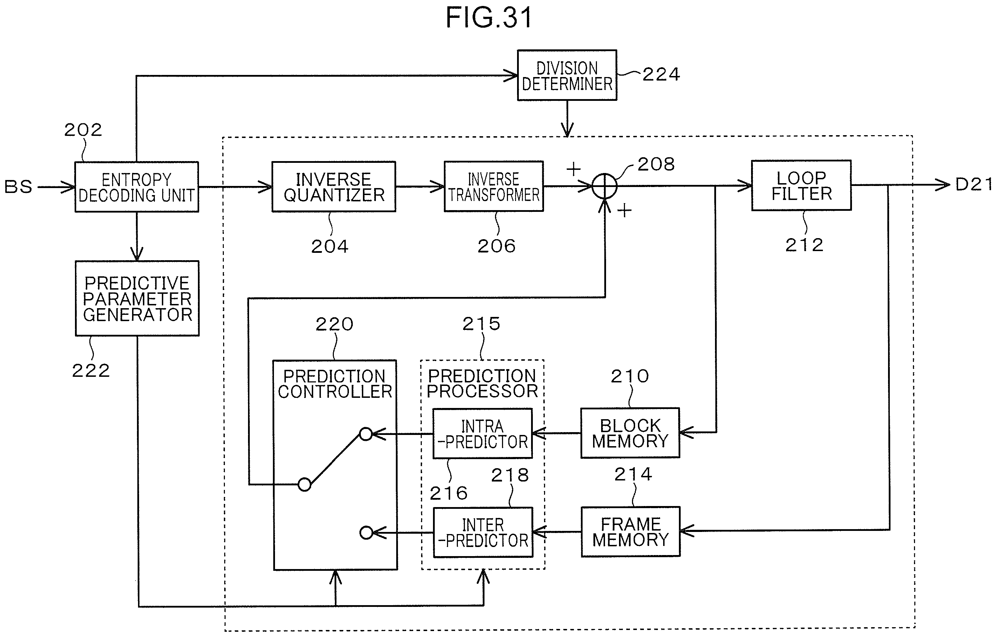

Description is made next to the decoding unit 52 according to the present embodiment. Fig. 31 is a block diagram depicting an exemplary functional configuration of the decoding unit 52 according to the present embodiment. The decoding unit 52 decodes a stream as an encoded image in block units.

As depicted in Fig. 31, the decoding unit 52 includes an entropy decoding unit 202, an inverse quantizer 204, an inverse transformer 206, an adder 208, a block memory 210, a loop filter 212, a frame memory 214, an intra-predictor 216, an inter-predictor 218, a prediction controller 220, a predictive parameter generator 222, and a division determiner 224. The intra-predictor 216 and the inter-predictor 218 constitute part of a prediction processor 215.

For example, the decoding unit 52 depicted in Fig. 31 includes a plurality of constituent elements implemented by the circuit 21 and the memory 22 depicted in Fig. 1.

The circuit 21 includes a processor such as a CPU. The circuit 21 may be constituted by an electronic circuit dedicated or generalized to stream decoding, or by an assembly of a plurality of electronic circuits. The circuit 21 may function as a plurality of constituent elements except for a constituent element for information storage, out of the plurality of constituent elements included in the decoding unit 52 depicted in Fig. 31.

The memory 22 may be constituted by an electronic circuit dedicated or generalized to information storage, or by an assembly of a plurality of electronic circuits. The memory 22 may be externally connected to the circuit 21 or may be incorporated in the circuit 21. The memory 22 may be a magnetic disk, an optical disk, or the like, or may be expressed as a storage, a recording medium, or the like. The memory 22 may be a nonvolatile memory or a volatile memory.

The memory 22 may store a steam to be decoded or a decoded image. The memory 22 may store a program for stream decoding by the processor.

The memory 22 may function as the constituent element for information storage, out of the plurality of constituent elements included in the decoding unit 52 depicted in Fig. 31. Specifically, the memory 22 may function as the block memory 210 and the frame memory 214 depicted in Fig. 31. More specifically, the memory 22 may store a restructured image (specifically, a restructured block, a restructured picture, or the like).

In the decoding unit 52, part of the plurality of constituent elements depicted in Fig. 31 is not necessarily mounted, and part of a plurality of processing executed by the plurality of constituent elements is not necessarily be executed. Alternatively, part of the plurality of constituent elements depicted in Fig. 31 may be mounted on a different device, and part of the plurality of processing executed by the plurality of constituent elements may be executed by the different device.

Each of the inverse quantizer 204, the inverse transformer 206, the adder 208, the block memory 210, the frame memory 214, the intra-predictor 216, the inter-predictor 218, the prediction controller 220, and the loop filter 212 included in the decoding unit 52 depicted in Fig. 31 executes processing similarly to each of the inverse quantizer 112, the inverse transformer 114, the adder 116, the block memory 118, the frame memory 122, the intra-predictor 124, the inter-predictor 126, the prediction controller 128, and the loop filter 120 included in the encoding unit 33 depicted in Fig. 29.

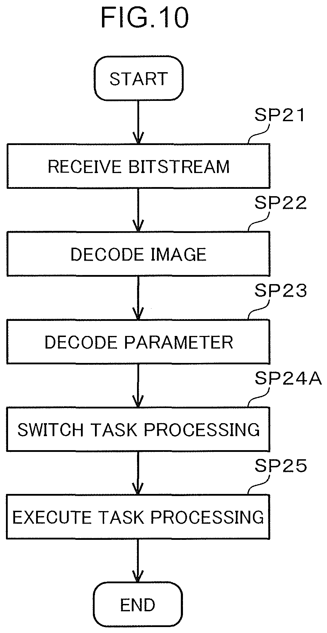

Fig. 10 is a flowchart depicting processing executed by the circuit 21 included in the decoding device 2.

Initially in step SP21, the receiver 51 receives the bitstream BS transmitted from the encoding device 1 via the transmission line NW.

Subsequently in step SP22, the decoding unit 52 acquires the image Q through decoding from the payload region 42 in the bitstream BS received from the receiver 51. Decoding may include extraction. The decoding unit 52 outputs image data D21 of the image Q. The image data D21 corresponds to the image data D11 indicated in Fig. 2.

Subsequently in step SP23, the decoding unit 52 acquires the parameter P through decoding from the header region 41 (or the predetermined region 43 in the header region 41) in the bitstream BS received from the receiver 51. The decoding unit 52 extracts modality information D22 contained in the parameter P. The modality information D22 corresponds to the modality information D12 indicated in Fig. 2. Processing in step SP22 and processing in step SP23 may be executed in inverse order of exemplification in Fig. 10, or may be executed simultaneously.

Subsequently in step SP24A, the switcher 53A switches among the task processors 54₁ to 54ₙ in accordance with the modality information D22 received from the decoding unit 52. The switcher 53A retains table information (not depicted) containing preliminarily set correspondence between a plurality of image types and the plurality of task processors 54₁ to 54ₙ. The switcher 53A refers to the table information to select one of the plurality of task processors 54₁ to 54ₙ corresponding to an image type indicated by the modality information D22.

Subsequently in step SP25, the one of the task processors 54₁ to 54ₙ thus selected in step SP24A executes task processing in accordance with the image data D21 received from the decoding unit 52 via the switcher 53A.

According to the present embodiment, the encoding device 1 can transmit, to the decoding device 2, the modality information D12 (D22) indicating the image type of the image Q and contained in the bitstream BS. This can improve execution accuracy of task processing by the decoding device 2.

According to the present embodiment, the decoding device 2 can execute the most appropriate processing (task processing or the like) according to the image type such as a visible light image, a thermal image, an infrared image, a LiDAR image, a RADAR image, or an AI generated image.

According to the present embodiment, the decoding device 2 can execute the most appropriate task processing according to the image type, so as to improve execution accuracy of task processing by the decoding device 2.

According to the present embodiment, the decoding device 2 can execute the most appropriate machine task according to the image type.

According to the present embodiment, the decoding device 2 can execute the most appropriate human vision according to the image type.

According to the present embodiment, the decoding device 2 can easily decode the parameter P from the predetermined region 43 in the bitstream BS.

Description is made hereinafter to various variations of the embodiment described above. Any of the variations to be described below can be appropriately combined for application.

### (First variation)

The decoding device 2 may switch among a plurality of AI models 55₁ to 55ₙ to be used for task processing in accordance with the modality information D22.

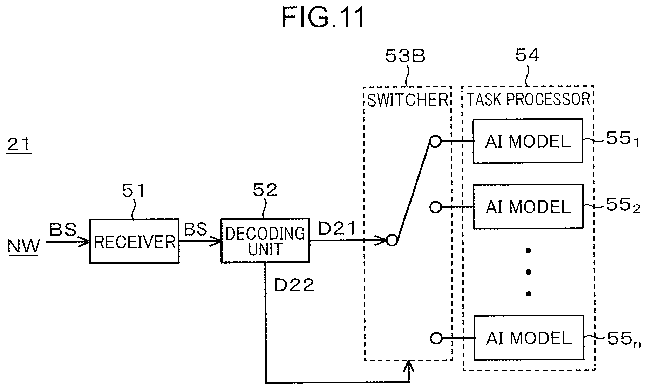

Fig. 11 is a simplified view depicting a configuration of the circuit 21 included in the decoding device 2. The circuit 21 includes the receiver 51, the decoding unit 52, a switcher 53B, and a task processor 54. The task processor 54 executes task processing including a human vision or a machine task. The task processor 54 includes the plural n of AI models 55₁ to 55ₙ. The AI models 55₁ to 55ₙ include a machine-learned neural network model. When object detection exemplifies the task processing executed by the task processor 54, the AI models 55₁ to 55ₙ include a convolutional neural network model such as ResNet or YOLO. The AI models 55₁ to 55ₙ each have a set parameter that may preliminarily be defined in the decoding device 2 or may be transmitted from the encoding device 1 to the decoding device 2 by means of another bitstream different from the bitstream BS.

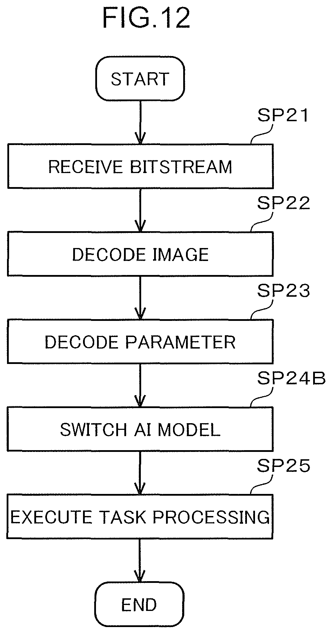

Fig. 12 is a flowchart depicting processing executed by the circuit 21 included in the decoding device 2.

Processing from steps SP21 to SP23 are similar to those depicted in Fig. 10.

Subsequently in step SP24B, the switcher 53B switches among the AI models 55₁ to 55ₙ in accordance with the modality information D22 received from the decoding unit 52. The switcher 53B retains table information (not depicted) containing preliminarily set correspondence between a plurality of image types and the plurality of AI models 55₁ to 55ₙ. The switcher 53B refers to the table information to select one of the plurality of AI models 55₁ to 55ₙ corresponding to the image type indicated by the modality information D22.

Subsequently in step SP25, the task processor 54 executes task processing in accordance with the image data D21 received from the decoding unit 52 via the switcher 53B with use of the one of the AI models 55₁ to 55ₙ thus selected in step SP24B.

The switcher 53B may switch among a plurality of image processing modes instead of the plurality of AI models 55₁ to 55ₙ. The plurality of image processing modes includes a mode for appropriate image processing such as filtering, segmentation, edge detection, or color analysis. The decoding device 2 may switch both among the task processors 54₁ to 54ₙ and among the AI models 55₁ to 55ₙ in accordance with the modality information D22.

According to the present variation, the task processor 54 in the decoding device 2 can execute task processing with use of the most appropriate one of the AI models 55₁ to 55ₙ or the most appropriate one of the image processing modes according to the image type of the image Q. This can improve execution accuracy of task processing by the decoding device 2.

### (Second variation)

Alternatively, the encoding device 1 may generate the image Q in accordance with a sensor data value or a sensing image, and the parameter P may contain transformation information D13 (D23) for transformation of a pixel value of the image Q to the sensor data value or transformation of the image Q to the sensing image. The sensor data value contains data value itself acquired from a sensor, a data column including such values aligned therein, or the like. The sensing image contains an image generated by arraying a plurality of sensor data values in a determinant manner, an image obtained by transforming the image, or the like. The sensing image may be a two-dimensional image or a three-dimensional image. The sensing image may have any appropriate pixel value such as 8 bits, 10 bits, or 16 bits.

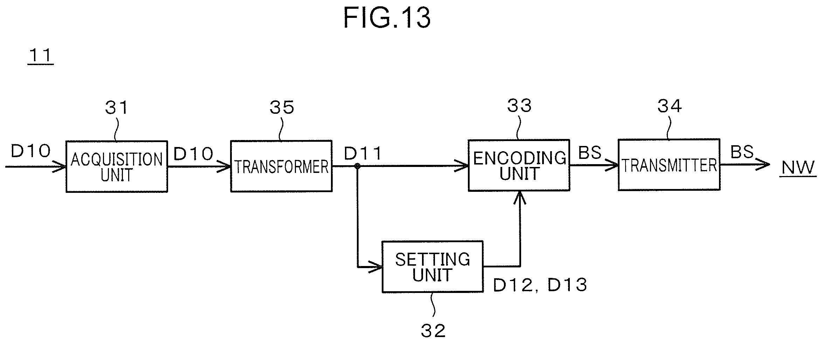

Fig. 13 is a simplified view depicting a configuration of the circuit 11 included in the encoding device 1. The circuit 11 further includes a transformer 35 in addition to the configuration depicted in Fig. 2.

The acquisition unit 31 acquires sensor data D10 received from an external device. The external device includes an image sensor, a temperature sensor, a distance sensor, or the like.

The transformer 35 transforms a sensor data value in the sensor data D10 received from the acquisition unit 31 to the pixel value of the image Q to generate the image data D11 of the image Q in accordance with the sensor data D10. The transformer 35 may image-transform the sensing image instead of transforming the sensor data value to the pixel value, to generate the image data D11 of the image Q in accordance with image data of the sensing image. The image Q is an encoding target image. The encoding target image is obtained by transforming a sensor data value or a sensing image to an encodable image. The encoding target image can be recognized as an image through a human vision. The encoding target image is a two-dimensional image. The encoding target image has a pixel value of a bit number conforming to a standard such as 8 bits, 10 bits, or the like.

Transformation executed by the transformer 35 may include transformation of a unit such as distance, temperature, or signal intensity. The transformation executed by the transformer 35 may include dimensional transformation such as transformation from a three-dimensional image to a two-dimensional image. The transformation executed by the transformer 35 may include coordinate system transformation such as transformation from a three-dimensional polar coordinate system to a two-dimensional orthogonal coordinate system or transformation from a three-dimensional orthogonal coordinate system to a two-dimensional orthogonal coordinate system. The transformation executed by the transformer 35 may include quantization transformation. The transformation executed by the transformer 35 may include data transformation by normalization. The normalization may include transformation with use of a numerical formula or transformation with use of table information. The transformation with use of a numerical formula may include any appropriate approach such as min-max scaling, z-score normalization, or log transformation.

The transformer 35 transmits the image data D11 to the encoding unit 33. The transformer 35 further transmits, to the setting unit 32, the transformation information D13 for inverse transformation from the image data D11 to the sensor data D10. The transformation information D13 contains image sample information. The image sample information contains image sample interpretation, an image sample expression type, angular resolution, focal length, or the like. The image sample interpretation defines an information type used for expression of an image sample in an image. The image sample can be expressed as distance, temperature, a radio wave, radiation, signal intensity such as a LiDAR pulse, or the like. The image sample expression type defines a method of transforming an image sample value to a sensor data value. The angular resolution or the focal length includes a transformation parameter for coordinate system transformation such as transformation from a two-dimensional orthogonal coordinate system to a three-dimensional polar coordinate system or transformation from a two-dimensional orthogonal coordinate system to a three-dimensional orthogonal coordinate system.

The setting unit 32 sets the parameter P in association with the image Q. The parameter P contains the modality information D12 on the image Q. The parameter P also contains the transformation information D13.

The encoding unit 33 encodes, into the bitstream BS, the image Q indicated by the image data D11 received from the transformer 35. The encoding unit 33 further encodes, into the bitstream BS, the parameter P containing the modality information D12 as well as the transformation information D13 and received from the setting unit 32.

The transmitter 34 transmits the bitstream BS received from the encoding unit 33 to the decoding device 2 via the transmission line NW.

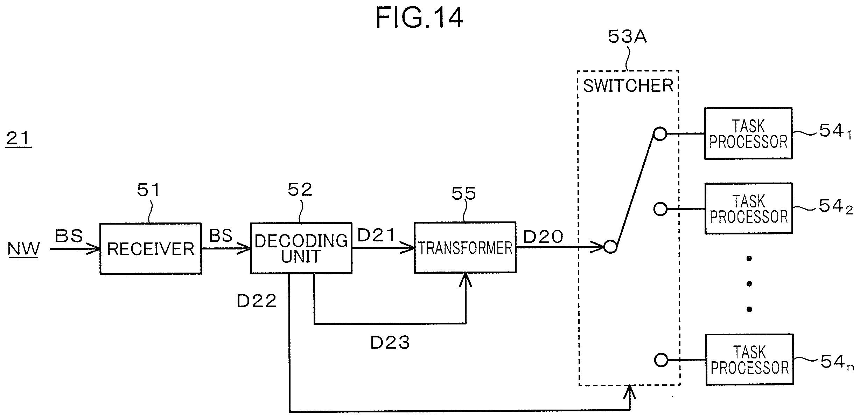

Fig. 14 is a simplified view depicting a configuration according to a first example, of the circuit 21 included in the decoding device 2. The circuit 21 further includes a transformer 55 in addition to the configuration depicted in Fig. 9.

The receiver 51 receives the bitstream BS transmitted from the encoding device 1 via the transmission line NW.

The decoding unit 52 decodes the image Q and the parameter P from the bitstream BS received from the receiver 51. The decoding unit 52 extracts the modality information D22 and the transformation information D23 contained in the parameter P. The transformation information D23 corresponds to the transformation information D13 indicated in Fig. 13.

The transformer 55 transforms the pixel value of the image Q indicated by the image data D21 received from the decoding unit 52 to the sensor data value in accordance with the transformation information D23 to generate sensor data D20 in accordance with the image data D21. The sensor data D20 corresponds to the sensor data D10 indicated in Fig. 13. The transformer 55 may transform the image Q to the sensing image through image transformation according to the transformation information D23 instead of transforming the pixel value to the sensor data value.

Transformation executed by the transformer 55 may include transformation of a unit such as distance, temperature, or signal intensity. The transformation executed by the transformer 55 may include dimensional transformation such as transformation from a two-dimensional image to a three-dimensional image. The transformation executed by the transformer 55 may include coordinate system transformation such as transformation from a two-dimensional orthogonal coordinate system to a three-dimensional polar coordinate system or transformation from a two-dimensional orthogonal coordinate system to a three-dimensional orthogonal coordinate system. The transformation executed by the transformer 55 may include inverse quantization transformation. The transformation executed by the transformer 55 may include data transformation by inverse normalization. The inverse normalization may include transformation with use of a numerical formula or transformation with use of table information. The transformation with use of a numerical formula may include any appropriate approach such as min-max scaling, z-score normalization, or log transformation.

The switcher 53A switches among the task processors 54₁ to 54ₙ in accordance with the modality information D22 received from the decoding unit 52.

One of the task processors 54₁ to 54ₙ selected by the switcher 53A executes task processing in accordance with the sensor data D20 received from the transformer 55 via the switcher 53A or the image data of the sensing image.

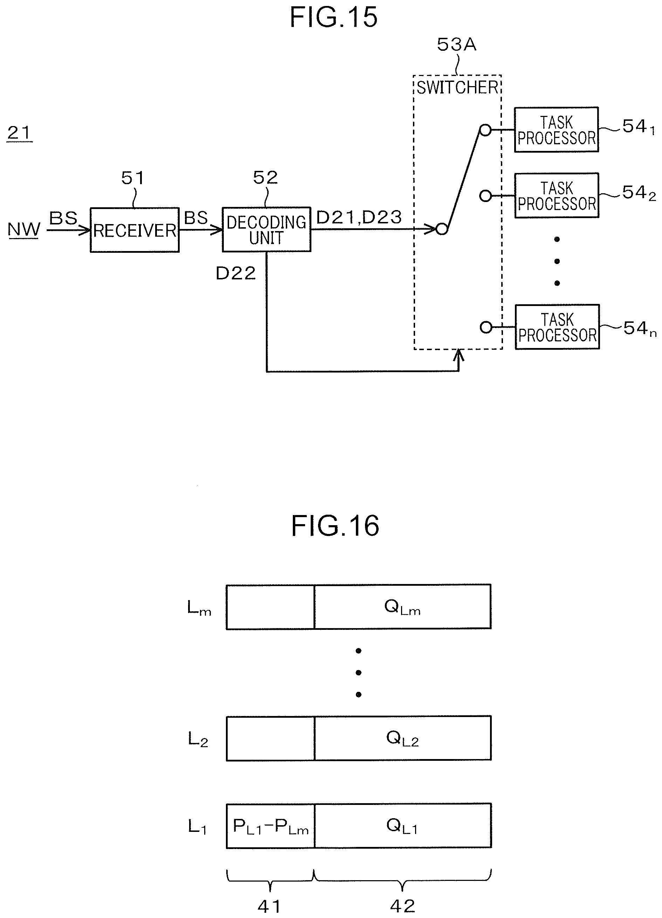

Fig. 15 is a simplified view depicting a configuration according to a second example, of the circuit 21 included in the decoding device 2.

The receiver 51 receives the bitstream BS transmitted from the encoding device 1 via the transmission line NW.

The decoding unit 52 decodes the image Q and the parameter P from the bitstream BS received from the receiver 51. The decoding unit 52 extracts the modality information D22 and the transformation information D23 contained in the parameter P.

The switcher 53A switches among the task processors 54₁ to 54ₙ in accordance with the modality information D22 received from the decoding unit 52.

The decoding unit 52 transmits the image data D21 and the transformation information D23 to the one of the task processors 54₁ to 54ₙ selected by the switcher 53A.

The one of the task processors 54₁ to 54ₙ selected by the switcher 53A executes task processing in accordance with the image data D21 and the transformation information D23 thus received. The one of the task processors 54₁ to 54ₙ may transform the pixel value of the image Q indicated by the image data D21 to the sensor data value in accordance with the transformation information D23 to generate the sensor data D20 in accordance with the image data D21. The one of the task processors 54₁ to 54ₙ may execute task processing in accordance with the sensor data D20 thus generated. Alternatively, the one of the task processors 54₁ to 54ₙ may transform the image Q to the sensing image through image transformation according to the transformation information D23 and may execute task processing in accordance with the sensing image.

According to the present variation, the encoding device 1 generates the image Q in accordance with the sensor data value or the sensing image so as to enable appropriate transmission of the image Q to the decoding device 2.

According to the present variation, the parameter P contains the transformation information D13 (D23) so as to enable the decoding device 2 to transform the pixel value of the image Q to the sensor data value or transform the image Q to the sensing image.

In an exemplary configuration depicted in Fig. 14, the decoding device 2 executes transformation processing prior to task processing so as to enable execution of the task processing according to the sensor data value or the sensing image.

In an exemplary configuration depicted in Fig. 15, the decoding device 2 executes transformation processing upon task processing so as to enable execution of the task processing according to the sensor data value or the sensing image.

### (Third variation)

The bitstream BS may have a multilayer configuration including image layers L₁ to Lₘ having plural m layers (m is a natural number of two or more).

Fig. 16 is a view of the multilayer configuration according to a first example. Fig. 16 depicts only a single access unit. The access unit is a minimum processing unit of a temporal attribute, and corresponds to one frame of a moving image or the like. The bitstream BS includes a plurality of temporarily continuous access units.

The payload region 42 in the image layer L₁ as a first or lowermost layer stores encoded data of an image Q_{L1} as a main image. The payload region 42 in an image layer L₂ as a second layer stores encoded data of an image Q_{L2} as an auxiliary image. Similarly, the payload region 42 in an image layer Lₘ as an m-th layer stores encoded data of an image Q_{Lm} as an auxiliary image.

The images Q_{L1} to Q_{Lm} are of image types different from one another. For example, in a multilayer configuration including three layers with m = 3, the image Q_{L1} is a visible light image, the image Q_{L2} is an infrared image, and an image Q_{L3} is a thermal image.

In a case where the images Q_{L1} to Q_{Lm} have correlation therebetween (e.g., an infrared image and a thermal image), image reference may be made among the image layers L₁ to Lₘ. In another case where the images Q_{L1} to Q_{Lm} have no correlation therebetween (e.g., a visible light image and a range image), no image reference may be made among the image layers L₁ to Lₘ.

The header region 41 in the image layer L₁ stores encoded data of a parameter P_{L1} associated with the image Q_{L1}. The parameter P_{L1} contains the modality information D12 on the image Q_{L1}. The header region 41 in the image layer L₁ also stores encoded data of parameters P_{L2} to P_{Lm} associated with the images Q_{L2} to Q_{Lm}. The parameters P_{L2} to P_{Lm} contain the modality information D12 on the images Q_{L2} to Q_{Lm}. There may be adopted an SDI (scalability dimension information)_SEI message for storage in the header region 41 in the specific image layer L₁ of the parameters P_{L1} to P_{Lm} for all the image layers L₁ to Lₘ.

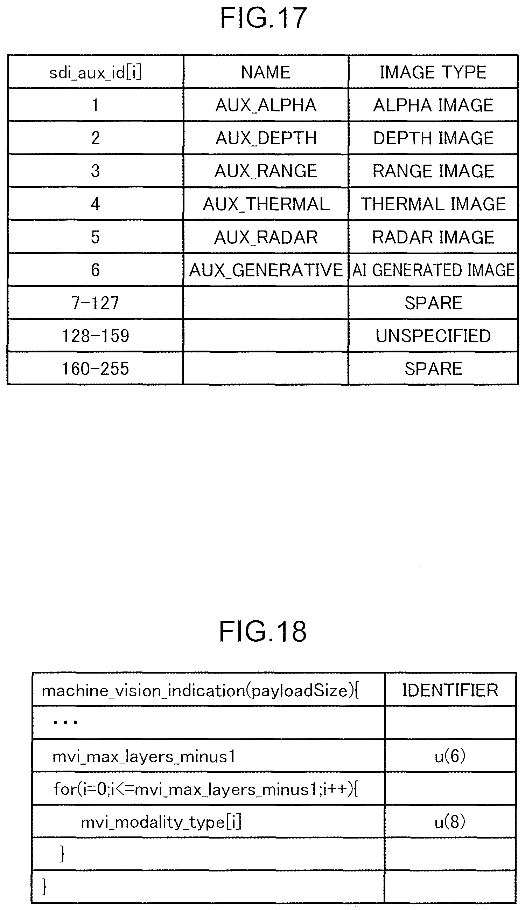

Fig. 17 is a chart of exemplary syntax relevant to setting of the modality information D12. The modality information D12 is expressed as a value of an identifier of sdi_aux_id[i] contained in the SDI_SEI message. The value of sdi_aux_id[i] equal to zero indicates that an i-th image layer Lᵢ does not include an image Q_{Li} as an auxiliary image. The value of sdi_aux_id[i] from one to six indicates that the i-th image layer Lᵢ includes the image Q_{Li} of an image type indicated in Fig. 17. The value of sdi_aux_id[i] from 7 to 127 and from 160 to 255 indicates a spare column reserved for future use, and the value of sdi_aux_id[i] from 128 to 159 indicates unspecified. The number of images defined in Fig. 17 may be increased or decreased in accordance with target image types.

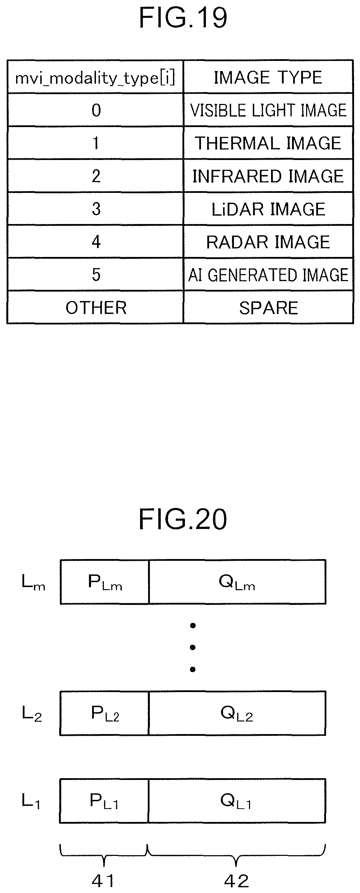

Figs. 18 and 19 are charts of exemplary syntax relevant to setting of the modality information D12 without use of the SDI_SEI message. The modality information D12 is expressed as a value of an identifier of mvi_modality_type[i] contained in the SEI message such as machine_vision_indication.

As indicated in Figs. 18 and 19, mvi_max_layers_minus1 specifies the number of layers included in the multilayer configuration, and the modality information for the number of layers thus specified is described collectively. Specifically, modality information on the image layer Lᵢ is described as mvi_modality_type[i].

The value of mvi_modality_type[i] equal to 0 indicates that the image type of the image Q_{Li} is a visible light image. The value of mvi_modality_type[i] equal to 1 indicates that the image type of the image Q_{Li} is a thermal image. The value of mvi_modality_type[i] equal to 2 indicates that the image type of the image Q_{Li} is an infrared image. The value of mvi_modality_type[i] equal to 3 indicates that the image type of the image Q_{Li} is a LiDAR image. The value of mvi_modality_type[i] equal to 4 indicates that the image type of the image Q_{Li} is a RADAR image. The value of mvi_modality_type[i] equal to 5 indicates that the image type of the image Q_{Li} is an AI generated image. The value of mvi_modality_type[i] having any other value indicates a spare column reserved for future use. The number of images defined in Fig. 19 may be increased or decreased in accordance with target image types.

Fig. 20 is a view of a multilayer configuration according to a second example. Fig. 20 depicts only a single access unit.

The payload region 42 in the image layers L₁ to Lₘ stores encoded data of the images Q_{L1} to Q_{Lm}.

The header region 41 in the image layer L₁ stores encoded data of the parameter P_{L1} associated with the image Q_{L1}. The header region 41 in the image layer L₂ stores encoded data of the parameter P_{L2} associated with the image Q_{L2}. Similarly, the header region 41 in the image layer Lₘ stores encoded data of the parameter P_{Lm} associated with the image Q_{Lm}. In this manner, the parameters P_{L1} to P_{Lm} for the image layers L₁ to Lₘ are stored in the header region 41 in the image layers L₁ to Lₘ.

Alternatively, the parameters P_{L1} to P_{Lm} for the image layers L₁ to Lₘ may be described in the VUI or the SEI in the image layers L₁ to Lₘ. Figs. 5 and 6 exemplify the case where the modality information D12 is expressed as the value of the identifier of vui_modality_type contained in the VUI parameter. Figs. 7 and 8 exemplify the case where the modality information D12 is expressed as the value of the identifier of mvi _modality_type contained in the SEI message such as machine_vision_indication. There may be adopted an SN (scalable nesting)_SEI message for collective storage in a single header region of the SEI in all the image layers L₁ to Lₘ.

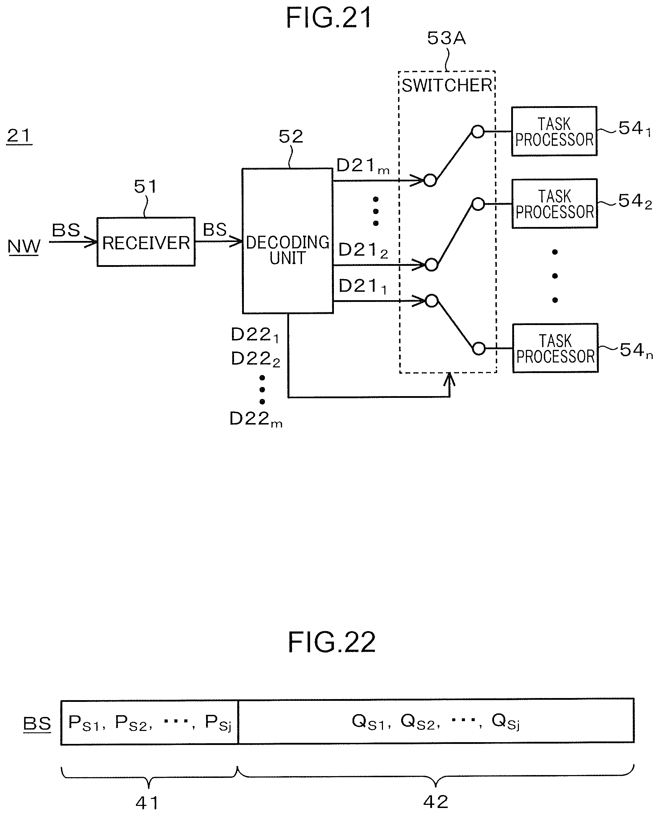

Fig. 21 is a simplified view depicting a configuration of the circuit 21 included in the decoding device 2.

The decoding unit 52 decodes the images Q_{L1} to Q_{Lm} from the payload region 42 in the bitstream BS having the multilayer configuration and received from the receiver 51. The decoding unit 52 outputs image data D21₁ to D21ₘ of the images Q_{L1} to Q_{Lm}.

The decoding unit 52 also decodes the parameters P_{L1} to P_{Lm} from the header region 41 in the bitstream BS having the multilayer configuration and received from the receiver 51. The decoding unit 52 extracts modality information D22₁ to D22ₘ contained in the parameters P_{L1} to P_{Lm}.

The switcher 53A switches among the task processors 54₁ to 54ₙ for each of the images Q_{L1} to Q_{Lm} in accordance with the modality information D22₁ to D22ₘ received from the decoding unit 52. The switcher 53A retains the table information (not depicted) containing preliminarily set correspondence between the plurality of image types and the plurality of task processors 54₁ to 54ₙ. The switcher 53A refers to the table information to select one of the plurality of task processors 54₁ to 54ₙ corresponding to an image type indicated by each piece of the modality information D22₁ to D22ₘ for each of the images Q_{L1} to Q_{Lm}.

The task processors 54₁ to 54ₙ execute task processing in accordance with the image data D21₁ to D21ₘ received from the decoding unit 52 via the switcher 53A.

Fig. 21 depicts the configuration in which the single task processor 54 receives a single piece of image data. Alternatively, there may be adopted a configuration in which the single task processor 54 receives plural pieces of image data. Specifically, the switcher 53A may retain the table information containing preliminarily set correspondence between the plurality of image types and the plurality of task processors 54₁ to 54ₙ, and a plurality of images Q may be associated with the single task processor 54 in the table information.

According to the present variation, the encoding device 1 can transmit to the decoding device 2 the plurality of images Q_{L1} to Q_{Lm} of different image types, and the decoding device 2 can appropriately decode the plurality of images Q_{L1} to Q_{Lm} from the bitstream BS.

In an exemplary configuration depicted in Fig. 16, the encoding device 1 can collectively encode the plurality of parameters P_{L1} to P_{Lm} associated with the plurality of images Q_{L1} to Q_{Lm} in the plurality of image layers L₁ to Lₘ into the header region 41 in the specific image layer L₁. Furthermore, the decoding device 2 can collectively decode the plurality of parameters P_{L1} to P_{Lm} associated with the plurality of images Q_{L1} to Q_{Lm} in the plurality of image layers L₁ to Lₘ from the header region 41 in the specific image layer L₁.

In an exemplary configuration depicted in Fig. 20, the encoding device 1 can individually encode the parameters P_{L1} to P_{Lm} associated with the images Q_{L1} to Q_{Lm} in the image layers L₁ to Lₘ into the header regions 41 in the image layers L₁ to Lₘ. Furthermore, the decoding device 2 can individually decode the parameters P_{L1} to P_{Lm} associated with the images Q_{L1} to Q_{Lm} in the image layers L₁ to Lₘ from the header regions 41 in the image layers L₁ to Lₘ.

### (Fourth variation)

The image Q may be divided into plural j (j is a natural number of two or more) subpictures Q_{S1} to Q_{Sj}.

Fig. 22 is a simplified view depicting a configuration of the bitstream BS. The encoding unit 33 stores encoded data of the subpictures Q_{S1} to Q_{Sj} in the payload region 42, and stores, in the header region 41, encoded data of parameters P_{S1} to P_{Sj} associated with the subpictures Q_{S1} to Q_{Sj}. The subpictures Q_{S1} to Q_{Sj} are of image types different from one another. The parameters P_{S1} to P_{Sj} contain the modality information D12 on the subpictures Q_{S1} to Q_{Sj}. There may be adopted the SN (scalable nesting)_SEI message for collective storage in the header region 41 of the parameters P_{S1} to P_{Sj} of all the subpictures Q_{S1} to Q_{Sj}.

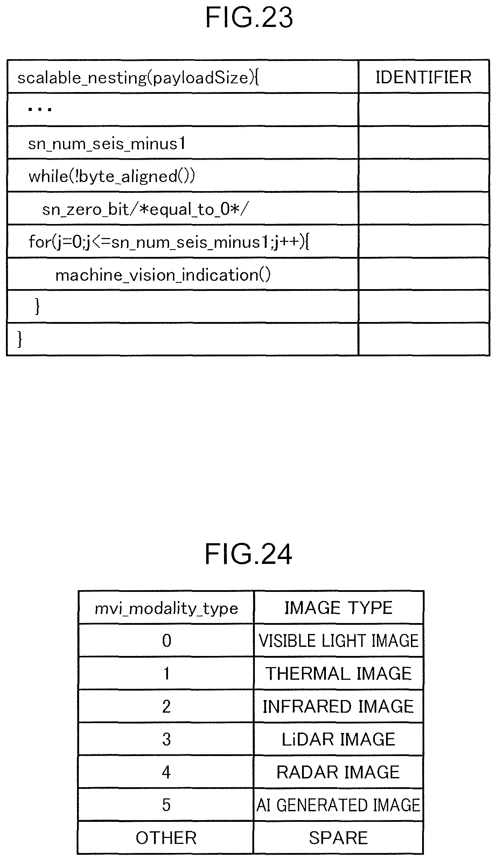

Figs. 23 and 24 are charts of exemplary syntax relevant to setting of the modality information D12. The modality information D12 associated with each of the subpictures Q_{S1} to Q_{Sj} is expressed as the value of the identifier of mvi_modality_type contained in j-th machine_vision_indication in the SN_SEI message.

As in Fig. 24, the value of mvi_modality_type equal to 0 indicates that the image type of the subpicture Q_{Sj} is a visible light image. The value of mvi_modality_type equal to 1 indicates that the image type of the subpicture Q_{Sj} is a thermal image. The value of mvi_modality_type equal to 2 indicates that the image type of the subpicture Q_{Sj} is an infrared image. The value of mvi _modality_type equal to 3 indicates that the image type of the subpicture Q_{Sj} is a LiDAR image. The value of mvi_modality_type equal to 4 indicates that the image type of the subpicture Q_{Sj} is a RADAR image. The value of mvi_modality_type equal to 5 indicates that the image type of the subpicture Q_{Sj} is an AI generated image. The value of mvi_modality_type having any other value indicates a spare column reserved for future use. The number of images defined in Fig. 24 may be increased or decreased in accordance with target image types.

According to the present variation, the encoding device 1 can transmit to the decoding device 2 the plurality of subpictures Q_{S1} to Q_{Sj} of different image types, and the decoding device 2 can appropriately decode the plurality of subpictures Q_{S1} to Q_{Sj} from the bitstream BS.

According to the present variation, the encoding device 1 can collectively encode the plurality of parameters P_{S1} to P_{Sj} associated with the plurality of subpictures Q_{S1} to Q_{Sj} into the header region 41 for the image Q. According to the present variation, the decoding device 2 can collectively decode the plurality of parameters P_{S1} to P_{Sj} associated with the plurality of subpictures Q_{S1} to Q_{Sj} from the header region 41 for the image Q.

### (Fifth variation)

The image Q may be constituted by plural k (k is a natural number of two or more) components Q_{C1} to Q_{Ck}.

The components Q_{C1} to Q_{Ck} are a plurality of constituents of the image Q. For example, a visible light image is constituted by a plurality of color constituents (R, G, and B), or is constituted by a single luminance constituent (Y) and a plurality of color difference constituents (Cb and Cr).

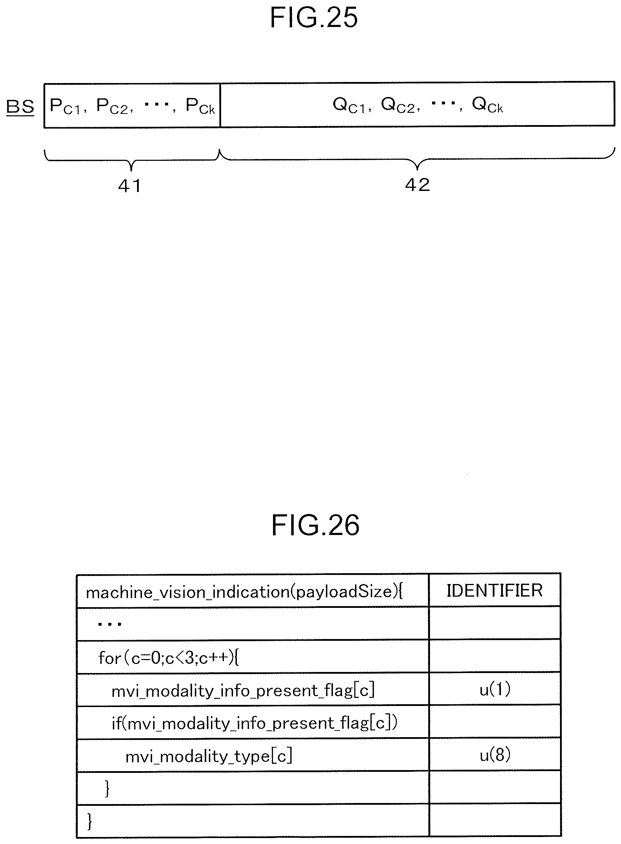

Fig. 25 is a view depicting an exemplary configuration of the image Q constituted by the plurality of components Q_{C1} to Q_{Ck}.

The payload region 42 in the bitstream BS stores encoded data of the component Q_{C1} corresponding to a first image constituent C₁, encoded data of a component Q_{C2} corresponding to a second image constituent C₂, and encoded data of the component Q_{Ck} corresponding to a k-th image constituent Cₖ.

The components Q_{C1} to Q_{Ck} are of image types different from one another. For example, in a configuration including three constituents with k = 3, the component Q_{C1} is a visible light image, the component Q_{C2} is an infrared image, and a component Q_{C3} is a thermal image.

In a case where the components Q_{C1} to Q_{Ck} have correlation therebetween (e.g., an infrared image and a thermal image), image reference may be made among the image constituents C₁ to Cₖ. In another case where the components Q_{C1} to Q_{Ck} have no correlation therebetween (e.g., a visible light image and a range image), no image reference may be made among the image constituents C₁ to Cₖ.

The header region 41 in the bitstream BS stores encoded data of parameters P_{C1} to P_{Ck} associated with the components Q_{C1} to Q_{Ck}. The parameters P_{C1} to P_{Ck} contain the modality information D12 on the components Q_{C1} to Q_{Ck}.

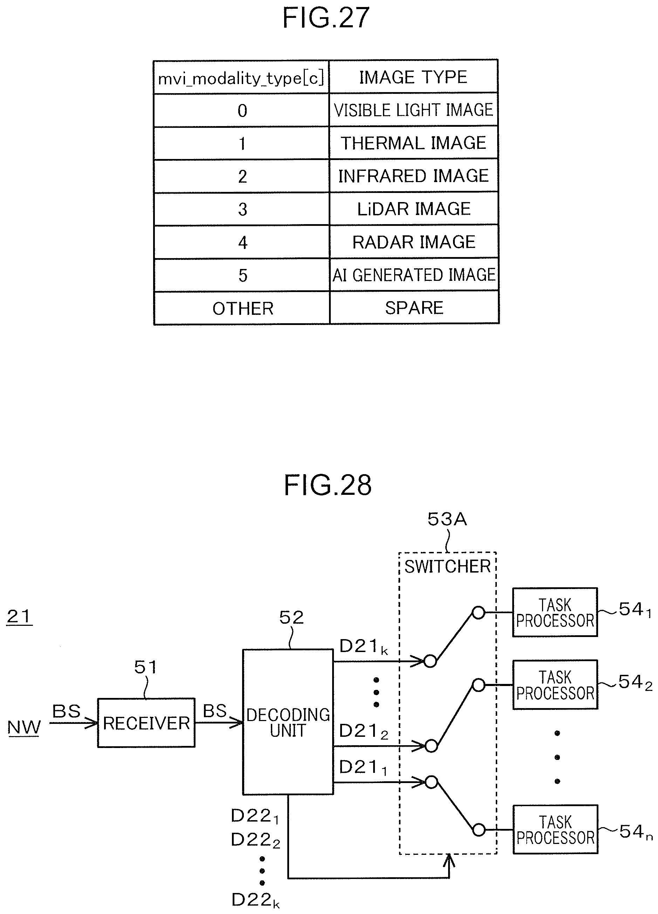

Figs. 26 and 27 are charts of exemplary syntax relevant to setting of the modality information D12. The modality information D12 is expressed as a value of an identifier of mvi_modality_type[c] contained in the SEI message such as machine_vision_indication.

As in Fig. 27, the value of mvi_modality_type[c] equal to 0 indicates that the image type of the component Q_{Ck} is a visible light image. The value of mvi_modality_type[c] equal to 1 indicates that the image type of the component Q_{Ck} is a thermal image. The value of mvi_modality_type[c] equal to 2 indicates that the image type of the component Q_{Ck} is an infrared image. The value of mvi_modality_type[c] equal to 3 indicates that the image type of the component Q_{Ck} is a LiDAR image. The value of mvi_modality_type[c] equal to 4 indicates that the image type of the component Q_{Ck} is a RADAR image. The value of mvi_modality_type[c] equal to 5 indicates that the image type of the component Q_{Ck} is an AI generated image. The value of mvi_modality_type[c] having any other value indicates a spare column reserved for future use. The number of images defined in Fig. 27 may be increased or decreased in accordance with target image types.

Fig. 28 is a simplified view depicting a configuration of the circuit 21 included in the decoding device 2.

The decoding unit 52 decodes the components Q_{C1} to Q_{Ck} from the payload region 42 in the bitstream BS having a multicomponent configuration and received from the receiver 51. The decoding unit 52 outputs image data D21₁ to D21ₖ of the components Q_{C1} to Q_{Ck}.

The decoding unit 52 also decodes the parameters P_{C1} to P_{Ck} from the header region 41 in the bitstream BS having the multicomponent configuration and received from the receiver 51. The decoding unit 52 extracts modality information D22₁ to D22ₖ contained in the parameters P_{C1} to P_{Ck}.

The switcher 53A switches among the task processors 54₁ to 54ₙ for each of the components Q_{C1} to Q_{Ck} in accordance with the modality information D22₁ to D22ₖ received from the decoding unit 52. The switcher 53A retains the table information (not depicted) containing preliminarily set correspondence between the plurality of image types and the plurality of task processors 54₁ to 54ₙ. The switcher 53A refers to the table information to select one of the plurality of task processors 54₁ to 54ₙ corresponding to an image type indicated by each piece of the modality information D22₁ to D22ₖ for each of the components Q_{C1} to Q_{Ck}.

The task processors 54₁ to 54ₙ execute task processing in accordance with the image data D21₁ to D21ₖ received from the decoding unit 52 via the switcher 53A.

Fig. 28 depicts the configuration in which the single task processor 54 receives a single piece of image data. Alternatively, there may be adopted a configuration in which the single task processor 54 receives plural pieces of image data. Specifically, the switcher 53A may retain the table information containing preliminarily set correspondence between the plurality of image types and the plurality of task processors 54₁ to 54ₙ, and the plurality of images Q may be associated with the single task processor 54 in the table information.

Depending on image types, there are an image constituted by three image constituents such as a color visible light image, and an image constituted by a single image constituent (hereinafter, referred to as a "single constituent image") such as a monochrome visible light image (a visible light image containing only a luminance constituent), a thermal image, an infrared image, a LiDAR image, or a RADAR image.

In an exemplary case where the bitstream BS is constituted by the three components Q_{C1} to Q_{C3} of a color visible light image, each piece of modality information D22₁ to D22₃ on the three components Q_{C1} to Q_{C3} relates to a visible light image. In another exemplary case where the bitstream BS is constituted by a monochrome visible light image, an infrared image, and a thermal image, the modality information D22₁ on the component Q_{C1} relates to a visible light image, modality information D22₂ on the component Q_{C2} relates to an infrared image, and the modality information D22₃ on the component Q_{C3} relates to a thermal image. In still another exemplary case where the bitstream BS is constituted only by an infrared image, the modality information D22₁ on the component Q_{C1} relates to an infrared image whereas no modality information is not assigned to the components Q_{C2} and Q_{C3}.

The encoding unit 33 encodes the single component Q_{C1} assigned with the modality information D22₁ into the bitstream BS as a normal image. The encoding unit 33 encodes the remaining components Q_{C2} to Q_{Ck} not assigned with the modality information D22₂ to D22ₖ into the bitstream BS as dummy images. Encoding as a dummy image may be simpler than encoding as a normal image.

The decoding unit 52 decodes the single component Q_{C1} assigned with the modality information D22₁ from the bitstream BS as a normal image. The decoding unit 52 decodes the remaining components Q_{C2} to Q_{Ck} not assigned with the modality information D22₂ to D22ₖ from the bitstream BS as dummy images. Decoding as a dummy image may be simpler than decoding as a normal image.

According to the present variation, the encoding device 1 can transmit to the decoding device 2 the plurality of components Q_{C1} to Q_{Ck} of different image types, and the decoding device 2 can appropriately decode the plurality of components Q_{C1} to Q_{Ck} from the bitstream BS.

According to the present variation, the encoding device 1 can encode the plurality of parameters P_{C1} to P_{Ck} associated with the plurality of components Q_{C1} to Q_{Ck} into the header region 41 in the bitstream BS. The decoding device 2 can decode the plurality of parameters P_{C1} to P_{Ck} associated with the plurality of components Q_{C1} to Q_{Ck} from the header region 41 in the bitstream BS.

According to the present variation, when only the single component Q_{C1} is of a necessary image type, the modality information D22₁ is assigned to the single component Q_{C1} so as to enable the encoding device 1 to appropriately encode the single component Q_{C1} into the bitstream BS and enable the decoding device 2 to appropriately decode the single component Q_{C1} from the bitstream BS.

According to the present variation, the encoding device 1 encodes, as dummy images, the remaining components Q_{C2} to Q_{Ck} not assigned with the modality information D22₂ to D22ₖ, so as to reduce a processing load to the encoding device 1. The decoding device 2 decodes, as dummy images, the remaining components Q_{C2} to Q_{Ck} not assigned with the modality information D22₂ to D22ₖ, so as to reduce a processing load to the decoding device 2.

The present disclosure is specifically usefully applicable to an image processing system including an encoding device configured to encode an image into a bitstream and transmit the bitstream and a decoding device configured to decode the image from the bitstream thus received.

## Claims

1. A decoding device comprising:
a circuit; and
a memory connected to the circuit,
wherein the circuit acquires, from a bitstream, an image and a parameter associated with the image, and
the parameter contains modality information indicating an image type of the image.

2. The decoding device according to claim 1, wherein the image type includes at least one of a visible light image, a thermal image, an infrared image, a LiDAR image, a RADAR image, or an AI generated image.

3. The decoding device according to claim 1, wherein
the circuit
executes task processing in accordance with the image, and
switches the task processing in accordance with the modality information.

4. The decoding device according to claim 3, wherein the task processing includes a machine task.

5. The decoding device according to claim 3, wherein the task processing includes a human vision.

6. The decoding device according to claim 1, wherein
the circuit
executes task processing in accordance with the image, and
switches an AI model or image processing used for the task processing in accordance with the modality information.

7. The decoding device according to claim 1, wherein the parameter further contains transformation information for transformation of a pixel value of the image to a sensor data value or transformation of the image to a sensing image.

8. The decoding device according to claim 7, wherein
the circuit
transforms the pixel value of the image to the sensor data value, or transforms the image to the sensing image in accordance with the transformation information, and
executes task processing in accordance with the sensor data value or the sensing image.

9. The decoding device according to claim 7, wherein the circuit executes task processing in accordance with the image and the transformation information.

10. The decoding device according to claim 1, wherein
the circuit acquires, for acquisition of the parameter, the parameter from a predetermined header region in the bitstream, and
the predetermined header region includes VUI or SEI.

11. The decoding device according to claim 1, wherein
the bitstream has a multilayer configuration including a plurality of image layers, and
the circuit acquires, for acquisition of the image, a plurality of images different in terms of the image type from the plurality of image layers.

12. The decoding device according to claim 11, wherein the circuit acquires, for acquisition of the parameter, a plurality of parameters associated with the plurality of images from a header region in a specific one of the plurality of image layers.

13. The decoding device according to claim 11, wherein the circuit acquires, for acquisition of the parameter, a plurality of parameters associated with the plurality of images from a plurality of header regions in the plurality of image layers.

14. The decoding device according to claim 1, wherein
the image is divided into a plurality of subpictures, and
the circuit acquires from the bitstream, for acquisition of the image, the plurality of subpictures different in terms of the image type.

15. The decoding device according to claim 14, wherein the circuit acquires, for acquisition of the parameter, a plurality of parameters associated with the plurality of subpictures from a header region for the image.

16. The decoding device according to claim 1, wherein
the image is constituted by a plurality of components, and
the circuit acquires from the bitstream, for acquisition of the image, the plurality of components different in terms of the image type.

17. The decoding device according to claim 16, wherein the circuit acquires, for acquisition of the parameter, a plurality of parameters associated with the plurality of components from a header region for the image.

18. The decoding device according to claim 16, wherein
the modality information is assigned to one of the plurality of components, and
the circuit acquires, for acquisition of the image, the one component from the bitstream.

19. The decoding device according to claim 18, wherein when the modality information is not assigned to another component different from the one component in the plurality of components, the circuit acquires, for acquisition of the image, the other component as a dummy image.

20. The decoding device according to claim 1, wherein
the circuit acquires, for acquisition of the image, a plurality of images different in terms of the image type, and
the circuit further executes at least one task processing in accordance with the plurality of images.

21. The decoding device according to claim 20, wherein
the plurality of images includes a visible light image, and
the at least one task processing includes a human vision.

22. An encoding device comprising:
a circuit; and
a memory connected to the circuit,
wherein the circuit encodes, into a bitstream, an image and a parameter associated with the image, and
the parameter contains modality information indicating an image type of the image.

23. The encoding device according to claim 22, wherein the image type includes at least one of a visible light image, a thermal image, an infrared image, a LiDAR image, a RADAR image, or an AI generated image.

24. The encoding device according to claim 22, wherein the circuit further generates the image in accordance with a sensor data value or a sensing image.

25. The encoding device according to claim 24, wherein the parameter further contains transformation information for transformation of a pixel value of the image to the sensor data value or transformation of the image to the sensing image.

26. The encoding device according to claim 22, wherein
the circuit encodes, for encoding of the parameter, the parameter into a predetermined header region in the bitstream, and
the predetermined header region includes VUI or SEI.

27. The encoding device according to claim 22, wherein
the bitstream has a multilayer configuration including a plurality of image layers, and
the circuit encodes, for encoding of the image, a plurality of images different in terms of the image type into the plurality of image layers.

28. The encoding device according to claim 27, wherein the circuit encodes, for encoding of the parameter, a plurality of parameters associated with the plurality of images into a header region in a specific one of the plurality of image layers.

29. The encoding device according to claim 27, wherein the circuit encodes, for encoding of the parameter, a plurality of parameters associated with the plurality of images into a plurality of header regions in the plurality of image layers.

30. The encoding device according to claim 22, wherein
the image is divided into a plurality of subpictures, and
the circuit encodes into the bitstream, for encoding of the image, the plurality of subpictures different in terms of the image type.

31. The encoding device according to claim 30, wherein the circuit encodes, for encoding of the parameter, a plurality of parameters associated with the plurality of subpictures into a header region for the image.

32. The encoding device according to claim 22, wherein
the image is constituted by a plurality of components, and
the circuit encodes into the bitstream, for encoding of the image, the plurality of components different in terms of the image type.

33. The encoding device according to claim 32, wherein the circuit encodes, for encoding of the parameter, a plurality of parameters associated with the plurality of components into a header region for the image.

34. The encoding device according to claim 32, wherein
the modality information is assigned to one of the plurality of components, and
the circuit encodes, for encoding of the image, the one component into the bitstream.

35. The encoding device according to claim 34, wherein when the modality information is not assigned to another component different from the one component in the plurality of components, the circuit encodes, for encoding of the image, the other component as a dummy image.

36. A decoding method comprising acquiring from a bitstream, by a decoding device, an image and a parameter associated with the image,
wherein the parameter contains modality information indicating an image type of the image.

37. An encoding method comprising encoding into a bitstream, by an encoding device, an image and a parameter associated with the image,
wherein the parameter contains modality information indicating an image type of the image.
